# EUROPEAN PATENT APPLICATION

(11) **EP 2 725 489 A1**
(43) Date of publication of application: **30.04.2014**
(21) Application number: 12189849.8
(22) Date of filing: 24.10.2012
(51) Int. Cl.: G06F 9/50, H04N 5/268, H04N 5/262

(54) **Method of operating a video processing apparatus**

(71) Applicant: PIXarithmic GmbH, 64331 Weiterstadt (DE)
(72) Inventor: Obstfelder, Juergen, 35606 Solms (DE)
(74) Representative: Rossmanith, Manfred

(57) **Abstract**

A method of operating a video/audio processing apparatus is suggested. The system comprises a plurality of processing units connected by data links for communicating packetized data. The method comprises the following steps: receiving the input signals according to user requests; providing resources for processing, routing, and transmitting signals; providing input signals; routing the input signals to selectable destinations according to user requests; monitoring the required resources for processing and/or routing the signals; comparing the required resources with available resources; and issuing a warning message to the user if the required resources exceed the available resources of the system. Also a processing apparatus is suggested which is adapted for executing the method.

## Description

### Field of the Invention

According to a first aspect the present invention is related to a method of operating a video/audio processing apparatus. In particular the present invention is related to a method according to claim 1. According to a second aspect the present invention is related to a video/audio processing apparatus.

### Background

Live video productions such as TV productions are realized today using vision mixers. Vision mixers are commercially available e.g. from the companies Grass Valley, Sony, Snell & Wilcox, and Ross.

A vision mixer (also called video switcher, video mixer, production switcher or simply mixer) is a device used to select between different video input signals to generate a video output signal. Besides creating different kinds of transitions the vision mixer can generate a multitude of video effects and comprises to keyers, matte generators, text generators etc. By means of the vision mixer the user also controls the routing of signals from various sources to selectable destinations.

The vision mixer also performs the routing and switching of audio signals accompanying the video signals. However, since the processing of video signals is more complex than the processing of audio signals the present patent application is focused on the video signal. It is to be understood that in the context of the present patent application the processing of the video signal also implies a corresponding processing of an accompanying audio signal. Only for the sake of better intelligibility of the description of the present invention audio signals are not always mentioned in addition to the video signals.

In order to enable the multiple functionalities of vision mixers they consist of a huge amount of hardware components to process the video signals. The processing hardware components are located in one housing and are connected with local bus solutions in order to control all video processing hardware in real-time to meet the fast control requirements of live productions. Ideally, the vision mixer executes a command in the next frame. Consequently, such kind of ideal real-time behavior is a function of the video standard. For a 50 Hz frame rate the processing should be completed within 20 ms and for a 60 Hz frame rate in 16.7 ms. It is to be noted that for standard resolution TV signals (SD), 1080i50 and 1080i60 signals we still talk about 50 Hz and 60 Hz signals, respectively, but the frame rate is actually only 25 and 30 frames per second. Thus, the permissible processing times for ideal real-time behavior for 1080i50 signals increases to 40 ms and for 1080i60 signals to 33.3 ms. In practice the response time of a video/audio processing apparatus to execute a processing command has increased gradually over the years due to the use of digital picture storage involved in digital processing. Today even delays of 100 ms can be found, though such a long delay is not desirable.

A conventional vision mixer comprises a central mixing electronic, several input channels and at least one output channel, a control unit and a user interface. Such kind of vision mixer is described for example in DE 103 36 214 A1.

The mixing electronic is provided with up to 100 or even more video input signals at the same time. The input signals are live video signals from cameras, recorded video clips from a server such as archived material, slow-motion clips from dedicated slow-motion servers, synthetic images, animations and alphanumeric symbols from graphic generators. Until present, FPGAs (field-programmable gate arrays) are used to process video.

Current vision mixers are expensive and difficult to operate. The European patent application EP 12175474.1 (attorney file reference 120014P) proposes to replace today's existing video processing systems/video production systems based on dedicated hardware by graphical processing unit (GPU) based processing units which are communicatively connected by an IP network structure. This system allows routing any source or input signal to any destination. However, the currently available bandwidth of IP networks does not allow routing any input signal to any destination simultaneously. It is potentially a huge problem if such a bandwidth shortage occurs during a video production and as a consequence a source signal which is required for a broadcasted program signal is not available. Such an event is a nightmare for a production director.

Therefore, it is not acceptable for an operator that during the production of a broadcast program a certain input or source signal cannot be routed to the required destination because of lack of bandwidth.

### Summary of the Invention

The present invention aims at finding a solution to this problem.

The present invention therefore suggests a method of operating a video/audio processing apparatus. The system comprises a plurality of processing units connected by data links for communicating packetized data. The method comprises the following steps:
- receiving the input signals according to user requests;
- providing resources for processing, routing, and transmitting signals;
- providing input signals;
- routing the input signals to selectable destinations according to user requests;
- monitoring the required resources for processing and/or routing the signals;
- comparing the required resources with available resources; and
- issuing a warning message to the user if the required resources exceed the available resources of the system.

In an advantageous embodiment the method further comprises the step of selecting input signals for the production. In this case it is useful when the method further comprises the step of calculating the necessary bandwidth for routing the selected input signals.

Advantageously, the method further comprises the step of routing the processed signals to selectable destinations.

In another advantageous embodiment the method further comprises the step of calculating the necessary processing time and issuing a warning message if the available processing power does not permit real-time processing.

According to a second aspect the present invention suggests a processing apparatus which is adapted for executing the inventive method.

### Drawings

In the drawing an embodiment of the present invention is illustrated. Features which are the same in the figures are labeled with the same or a similar reference numbers. It shows:
Fig. 1 a schematic block diagram of a conventional vision mixer;
Fig. 2 a schematic block diagram of a system for video processing which is operated by a method according to the present invention;
Fig. 3 a flow diagram illustrating the method according to the invention; and
Figs. 4A and 4B further schematic illustrations of the system of Fig. 2.

### Detailed description

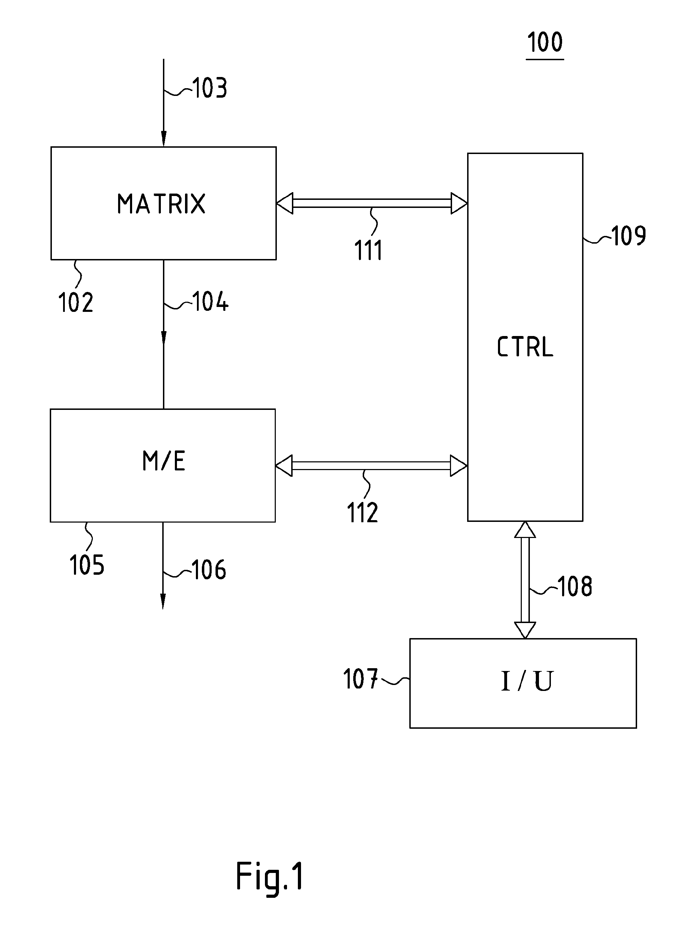

Figure 1 shows a schematic block diagram of a conventional vision mixer 100 which is also briefly called mixer. The mixer 100 comprises a cross point matrix or matrix 102 having a plurality of video inputs and a plurality of video outputs symbolized by arrows 103 and 104, respectively. Professional vision mixers are using serial digital interface (SDI) digital data for receiving or sending video data. The SDI digital data also comprise embedded audio streams, ancillary data, clock data and meta data. In a 1.5 Gbit/s data stream there are 16 embedded audio channels and in a 3.0 Gbit/s data stream there are 32 embedded audio streams. The mixer 100 can send and receive digital data also in other formats. The matrix 102 is adapted for connecting any one of the video inputs with any one of the video outputs in response to a user command. The output channels of the matrix 102 are provided to a video effect stage (M/E stage) 105 of a mixer. The video output signal processed by the M/E stage 105 is indicated with an arrow 106. The functionalities of mixer 100 are controlled by means of an input unit 107 into which the user can enter control commands to control and execute the processing of the video input signals and to create and to produce a desired video output signal. The input unit 107 transfers the control commands via the data and control bus 108 to a control unit 109. The control unit 109 interprets the user input commands and addresses corresponding command signals to the matrix 102 and the M/E stage 105. For this purpose the control unit 109 is connected with the matrix 102 and the M/E stage 105 with data and control buses 111 and 112, respectively. The buses 108, 111, and 112 are bidirectional buses allowing return messages to the control unit 109 and the input unit 107. The return messages provide feedback of the operating status of matrix 102 and the M/E stage 105. The input unit 107 displays status indicators reflecting the operating status of the mixer 100 for the information of the user.

Modern vision mixers are provided with many more video input and output channels as it has been mentioned above and comprise up to eight downstream keyers. In consequence such a modern vision mixer is provided with more than 1000 pushbuttons. Obviously, a modern vision mixer is a complicated and expensive hardware device which is difficult to operate.

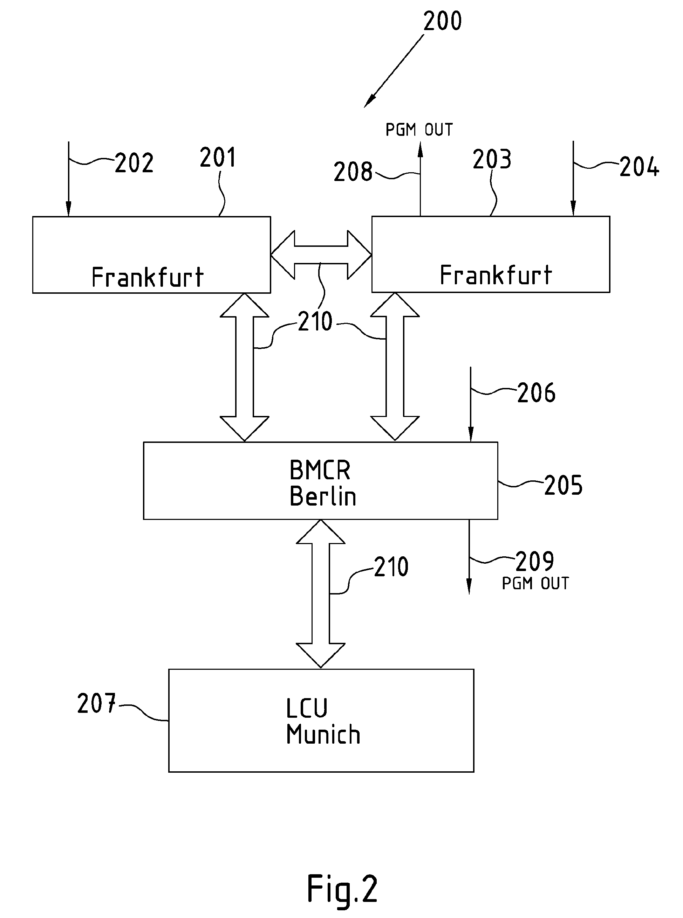

Figure 2 shows a schematic block diagram of the architecture of an alternative system for processing video and/or audio signals which has been described in detail in the European patent application EP12175474.1 filed by the same applicant. The proposed architecture of the inventive system allows building the hardware platform on standardized IT technology components such as servers, graphical processing units (GPU) and high-speed data links. Typically, these standardized IT components are less costly than dedicated broadcast equipment components. Besides the cost advantage the proposed system benefits automatically from technological progress in the area of the above-mentioned IT components. In the proposed system video processing hardware is split into smaller and flexible video processing units and combines dedicated control, video and audio interconnections into one logical data link between the individual processing units. The data links are designed such that they have a reliable and constant time relation. The individual processing units work independently as fast as possible to achieve or even exceed real-time processing behavior. What kind of signal latency corresponds to real-time behavior depends on the video frame rate as explained above. The system ensures that overall production real-time behavior with simultaneous processing is achieved and generates a consistent production signal PGM - OUT. For this purpose the known individual delays for the transfer of control, video and audio signals between the different production units are considered. The data links are typically based on a reliable bidirectional high-speed data connection such as LAN or WAN. This general concept is described in greater detail in the following.

In the video processing system according to the present invention the video processing hardware is organized in processing units 201, 203, 205, and 207 according to the geographical distribution of a production i.e. according to the geographical distribution of the resources enabling the production as it is shown schematically in figure 2. The technical core of each processing unit is a server, one or several graphical processing units (GPUs) and high-speed data link connections operated by a processing application framework and dedicated algorithms. The processing application framework and the algorithms are realized in software. The algorithms are adaptable and extendable to also realize further functionalities going beyond the functionalities of conventional vision mixers. The video signals are processed by GPUs in commercially available graphic cards. Hence, conventional video processing by dedicated hardware is replaced by software running on standardized IT components. All the processing capabilities of the GPUs are available and enable new video effects.

The operator controls the whole production as if it would be at one single production site in a single production unit next to the control room. The entire production process is moved from dedicated video/audio and control routing to common data links. The individual wiring hardware such as SDI connections is replaced by standardized data networks. The routing of all signals in the data networks is bidirectional and the production output and monitoring signals like dedicated multi-view outputs can be routed to any production unit which is connected in the network without extra cabling expenses.

High-speed data networks are more and more available not only in video production sites such as film or TV studios but also in wide area distribution networks, e.g. multiple of 10 G Ethernet or Infiniband.

In studios, professional video networking means that the video content is transferred uncompressed. For HDTV formats 1080i/720p data rates of 1.5 Gbit/s are resulting in studio environment where uncompressed audio and video data are used. For HD format 1080p a net data rate of even 3.0 Gbit/s is resulting.

Referring back to figure 2 every block represents one of the distributed processing units belonging to the system which is referred to in its entirety with reference number 200. In the exemplary embodiment shown in Figure 2 processing unit 201 is located in a football stadium in Frankfurt. Processing unit 201 receives as local sources 202 camera signals from the Stadium, slow-motion video from a local slow-motion server and eventually audio and video signals from an interview taking place locally. Processing unit 203 is also located in Frankfurt but not necessarily in the same place as processing unit 201. Processing unit 203 receives camera signals as local sources 204 from a live presenter in an interview room. Processing unit 205 is located in Berlin and represents the main processing room providing additional processing power for the ongoing production as well as access to archives and servers where for example advertisement clips are stored. The archives and the servers are indicated as local sources 206. The local sources 202, 204, and 206 provide the video and/or audio signals as SDI or streaming data. Finally, there is a processing unit 207 which represents the live control unit (LCU) located in Munich from where the live production is controlled and monitored. The production result is leaving processing units 203 and 205 as video and audio output signals PGM - OUT 208 and 209 for being broadcasted. The processing units 201, 203, 205, and 207 are interconnected with each other with reliable bidirectional high-speed data links 210 as shown in figure 2. The data links 210 enable communication between the processing units 201, 203, 205, and 207 and provide constant and known signal delays between the production units. It is noted that the high-speed data links 210 represent logical data links which are independent of a specific hardware realization. For example, the data links 210 can be realized with a set of several cables. In the situation shown in figure 2 the data links 210 are an Internet protocol (IP) wide area network (WAN). In a WAN special measures have to be taken to make sure that the data packages are received in the same sequence as they have been sent over the network to meet the requirements of video processing. Appropriate measures can be taken on the protocol and/or hardware level of the network such that the system behaves like a single big vision mixer.

In practice there is no difference in the application of a conventional hardware-based vision mixer and the software-based vision mixer utilizing several processing units which are connected by an IP network.

A typical example of the use of a vision mixer is the production of a broadcast covering a sports event. The vision mixer composes several layers of images, i.e. input signals for the program signal. In a specific example the vision mixer receives the background graphic as an input signal and puts a presenter on top of it as a chromakey signal. Finally, the title is inserted as another keyer signal. These input signals represent the different layers of the composed image signal, namely the background signal is layer 1, the presenter is layer 2, and the title is layer 3. The composed image signal is also called a "scene". In other examples of composed image signal comprises even more layers, e.g. an additional over-the-shoulder insertion which is an additional small image next to the presenter.

The input signals for all layers are provided by a plurality of I/O modules (not shown in figure 2) because a single I/O module does not have enough bandwidth to feed all possible signals for all layers of all scenes simultaneously. In this situation it helps that for most layers there is only a single source that makes sense, e.g. the title comes from a character generator and no other source will generate the title. Similar cases like this limit the number of meaningful combinations routing of the source signals to a specific destination significantly. In consequence, the required bandwidth is in practice smaller than the bandwidth which would be necessary to enable the routing of every source signal to any destination. Nevertheless, it is necessary to predict a possible bandwidth shortage already during the production set up because it has to be avoided that the bandwidth shortage can negatively impact the program output signal. For example, it has to be avoided that an interview partner in a studio in Berlin cannot be shown together with a presenter in Frankfurt.

In order to achieve this prediction capability the method according to the present invention determines at first what are alternative sources for a certain destination or mixer layer. This can be illustrated for example by means of a sports broadcast reporting from a soccer game. In the break between the first and the second half of the game the cameras inside the stadium are essentially of no interest because it is planned to interview an expert about the game during the break. During the break it is therefore not necessary to provide for routing capacity for the cameras inside the stadium. Only the signals of two cameras in the studio room where the interview takes place are needed. Though there may be in total 35 input signals available only the inputs of the two cameras in the studio room make sense. Thus, it is not necessary to provide for bandwidth for routing the other 33 input signals.

In order to take into account such kind of situations the inventive method determines which input signals are used simultaneously. Only for these input signals the necessary bandwidth has to be provided for. Practically, the user is prompted to select the input signals he needs for the production. Based on the user input and the information which composed images are contributing to the program output an algorithm calculates the bandwidth requirement for the production. The calculated required bandwidth is then compared with a previously entered guaranteed bandwidth. If the required bandwidth exceeds the guaranteed bandwidth then a first warning message is displayed to the user. In response to the first warning message the user can either change the production and compose simpler images with fewer input signals or he can take necessary steps to obtain a higher guaranteed bandwidth to avoid any bandwidth related problems during the production.

It is noted that in conventional hardwired production systems such monitoring is not needed because each signal is routed in a dedicated channel. Therefore, in conventional production systems the necessary bandwidth for each signal is always available.

In addition to that, in an embodiment of the present invention another algorithm monitors the necessary processing steps to create the image compositions and puts that in relation to the available processing power of one or several processing unit(s). If the monitoring reveals that the desired image processing cannot be done any more in real time then a second warning message is displayed to the user. The user can respond to the second warning message by simplifying the production or by increasing the processing power e.g. by integrating more graphical processing units in the processing unit. The user takes care of the adaptation of the production set up before the live production takes place.

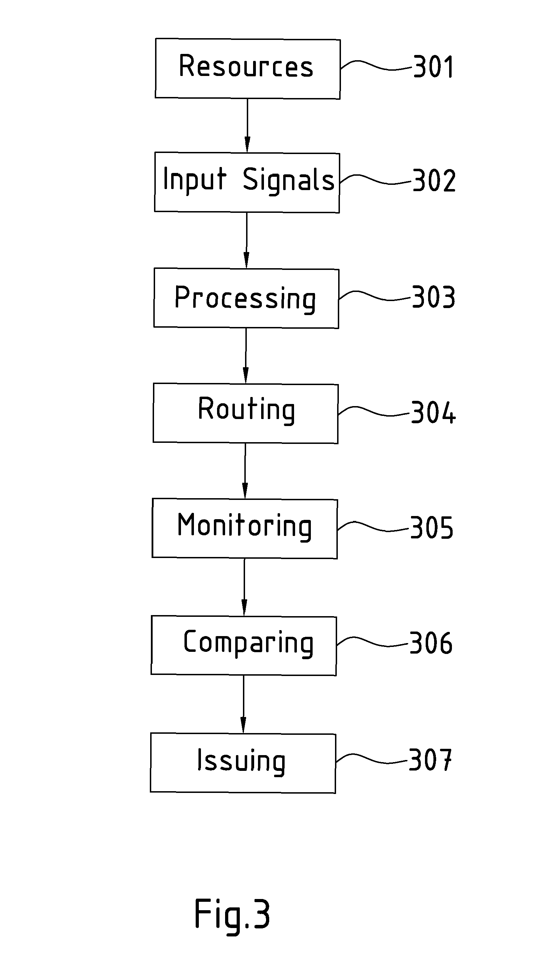

Figure 3 shows a flow diagram illustrating the method according to the present invention. In a first step 301 resources for processing, routing, and transmitting signals are provided. In step 302 input signals are provided to the system. In step 303 the input signals are processed according to user requests. In step 304 the processed signals are routed to selectable destinations according to user requests. In step 305 the required resources for processing and routing the signals are monitored. In step 306 the required resources are compared with available resources. Finally, in step 307 a warning message is issued to the user if the required resources exceed the available resources of the system.

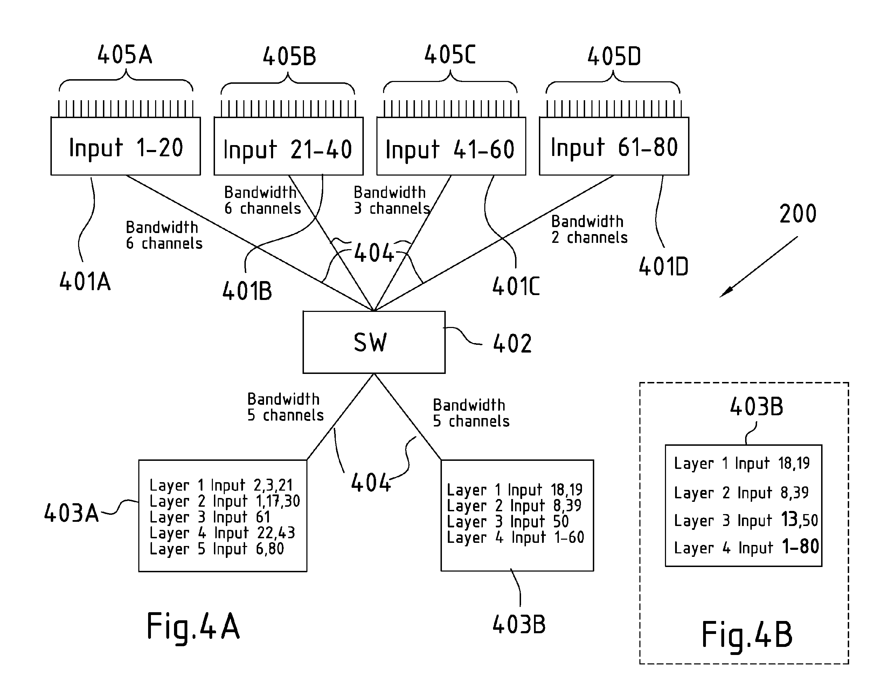

The algorithm underlying the method according to the invention is explained in greater detail in connection with figures 4A and 4B.

Figure 4A shows a different schematic block diagram of the processing system 200 of figure 2. In the exemplary embodiment shown in figure 4A, the system comprises 4 input units 401A to 401D, one network switch 402 and two processing units 403A and 403B. The network switch 402 is connected by network links 404 with the input units 401A to 401D on the one hand and with the processing units 403A and 403B on the other hand. In a practical embodiment the input units are realized as computer servers. Each computer is equipped with several I/O cards or I/O modules each one having a number of BNC or SDI inputs. Each input unit 401A to 401D has 20 inputs 405A to 405D, i.e. the system 200 has 80 signal inputs in total. The inputs 405A to 405D receive e.g. camera signals, output signals of digital video recorders etc. The network links are realized as an IP-based computer network providing a data rate from 10 to 40 GB. There are 9 destinations to where the input signals can be routed namely 5 signal layers in processing unit 403A and 4 signal layers in processing unit 403B. In figures 4A and 4B as well as in the tables below several input signals are associated with one signal layer these signals are to be understood as alternative input signals as defined by the user. A signal layer always receives only one input signal at a time.

A conventional hardware input routing would offer 80x9 = 180 cross points with the respective 180x bandwidth. In the example shown in figure 4A the network bandwidth per input unit is much more limited. In figure 4A it is assumed that each input signal has the same bandwidth and thus the guaranteed data rate enables the data links 404 to transfer a defined number of input signals because the required bandwidth for one input signal is known. One input signal is also called "channel". Figure 4A shows the guaranteed data rate as an integer multiple of channels. It can be seen that in the example shown in figure 4A input units 401A and 401B can both transfer 6 input signals to the network switch 402, the input unit 401C three input signals, and input unit 401D two input signals, respectively.

In response to user commands the input units provide input signals to the signal layers of the processing units 403A and 403B. For a detailed analysis the required bandwidth per input unit has to be monitored. In the situation illustrated in figure 4A the bandwidth requirement for providing the input signals to a destination selected by the user is summarized for each input unit 401A to 401D in an individual table. The left column in the tables shows the needed bandwidth while in the right column the user selection is indicated, i.e. which input signal(s) shall be routed to which signal layer as destination.

**Table 1: Bandwidth requirement for Input Unit 401A**

| **Bandwidth** | **User Selection** |
|---|---|
| 1x for 403A | Layer 1 of 403A (when input 2 or 3 is selected) |
| 1x for 403A | Layer 2 of 403A (when input 1 or 17 is selected) |
| 1x for 403A | Layer 5 of 403A (when input 6 is selected) |
| 1x for 403B | Layer 1 of 403B (when input 18 or 19 is selected) |
| 1x for 403B | Layer 2 of 403B (when input 8 is selected) |
| 1x for 403B | Layer 4 of 403B (when input 1-20 is selected) |

As table 1 shows, input unit 401A needs to have sufficient bandwidth to be able to provide 6 input signals at the same time. As indicated in figure 4A input unit 401A is connected with a link that can carry 6 channels and therefore no routing problems are expected.

**Table 2: Bandwidth requirement for Input Unit 401B**

| **Bandwidth** | **User Selection** |
|---|---|
| 1x for 403A | Layer 1 of 403A (when input 21 is selected) |
| 1x for 403A | Layer 2 of 403A (when input 30 is selected) |
| 1x for 403A | Layer 4 of 403A (when input 22 is selected) |
| 1x for 403B | Layer 2 of 403B (when input 39 is selected) |
| 1x for 403B | Layer 4 of 403B (when input 21-40 is selected) |

As table 2 shows, input unit 401B needs to have sufficient bandwidth to be able to provide 5 input signals at the same time. As shown in figure 4A input unit 401B is connected with a link that can carry 6 channels and therefore no routing problems are expected.

**Table 3: Bandwidth requirement for Input Unit 401C**

| **Bandwidth** | **User Selection** |
|---|---|
| 1x for 403A | Layer 4 of 403A (when input 43 is selected) |
| 1x for 403B | Layer 3 of 403B (when input 50 is selected) |
| 1x for 403B | Layer 4 of 403B (when input 41-60 is selected) |

As table 3 shows, input unit 401C needs to have sufficient bandwidth to be able to provide 3 input signals at the same time. As shown in figure 4A, input unit 401C is connected with a link that can carry 3 channels and therefore no routing problems are expected.

**Table 4: Bandwidth requirement for Input Unit 401D**

| **Bandwidth** | **User Selection** |
|---|---|
| 1x for 403A | Layer 3 of 403A (when input 61 is selected) |
| 1x for 403A | Layer 5 of 403A (when input 80 is selected) |

As table 4 shows, input unit 401D needs to have sufficient bandwidth to be able to provide 2 input signals at the same time. As illustrated in figure 4A, input unit 401D is connected with a link that can carry 2 channels and therefore no problems caused by the routing are expected.

Processing unit 403A uses 5 layers which need 5 input signals from the network switch 402. The data link between the network switch 402 and the processing unit 403A can carry 5 channels at the same time. Therefore, also on the level of processing unit 403A no problems caused by the routing are expected.

Finally, processing unit 403B uses 4 layers needing 4 input signals from the network switch 402. The data link between the network switch 402 and the processing unit 403B can carry 5 channels at the same time. Hence, also for processing unit 403B no routing related problems are to be expected.

The situation described in connection with figure 4A is a "save" set up where all selected input signals are available at the selected destinations at any time.

However, not every setup is save which is illustrated by means of the small inserted figure 4B showing a second configuration of the processing system 200. The changes are only made on the level of the processing unit 403B and the rest of the setup is identical to what is shown in figure 4A. The changes in the processing unit 403B are emphasized in figure 4B in bold numbers, namely in layer 3 input signal 13 is selected additionally and in later 4 input 1-80 is selected instead of only input 1-60.

The changes impact only on input unit 401A and input unit 401D. In consequence, tables 2 and 3 remain unchanged and thus no routing problems are expected. The changes are explained by means of table 1' and table 4' where the differences compared to table 1 and 4 are emphasized in bold letters.

**Table 1': Bandwidth requirement for Input Unit 401A**

| **Bandwidth** | **User Selection** |
|---|---|
| 1x for 403A | Layer 1 of 403A (when input 2 or 3 is selected) |
| 1x for 403A | Layer 2 of 403A (when input 1 or 17 is selected) |
| 1x for 403A | Layer 5 of 403A (when input 6 is selected) |
| 1x for 403B | Layer 1 of 403B (when input 18 or 19 is selected) |
| 1x for 403B | Layer 2 of 403B (when input 8 is selected) |
| **1x for 403B** | **Layer 3 of 403B (when input 13 is selected)** |
| 1x for 403B | Layer 4 of 403B (when input 1-20 is selected) |

As table 1' shows, input unit 401A needs to have sufficient bandwidth to be able to provide 7 input signals at the same time while the data link 404 connecting the input unit 401A with network switch 402 can carry only 6 channels and therefore routing problems have to be expected.

**Table 4': Bandwidth requirement for Input Unit 401D**

| **Bandwidth** | **User Selection** |
|---|---|
| 1x for 403A | Layer 3 of 403A (when input 61 is selected) |
| 1x for 403A | Layer 5 of 403A (when input 80 is selected) |
| **1x for 403B** | **Layer 4 of 403B (when input 61-80 is selected)** |

As table 4' shows, input unit 401D needs to have sufficient bandwidth to be able to provide 3 input signals at the same time while the data link 404 connecting the input unit 401D with network switch 402 can carry only 2 channels and therefore routing problems have to be expected.

Processing units 403A and 403B are not impacted by the changes of setup from figure 4A to figure 4B. Like in the situation illustrated in figure 4A processing unit 403A still needs bandwidth for 5 channels and processing unit 403B bandwidth for 4 channels. Therefore, on the level of the processing units 403A and 403B no routing problems have to be expected.

The setup described in connection with figure 4B is a "conflict" setup because not every input signal can be routed to the destination selected by the user. In order to avoid such kind of difficult situation during a live production, the user will be warned that on input unit 401A and 401D there is a shortage of bandwidth and the possible input selections have to be adapted accordingly. A corresponding warning message is displayed to the user.

So far only resource issues in terms of a possible bandwidth shortage and the negative impacts during a live production were considered. However, it is also important to take into account the necessary processing time of the signals in the processing units to secure real-time processing. If we take the example of the video standard 720p60 the frame rate is 16.7 ms. This is the maximum time duration the processing unit can spend for processing a complete output signal if the processing shall be completed for the next frame. The time needed for different types of processing is known. As a first example the following processing steps are considered:

| | |
|---|---|
| Color Correction | 1 ms |
| Chromakey | 2 ms |
| 2D-swirl-effect | 2 ms |
| 3D-pageturn | 1 ms |
| 3D-Teapot | 4 ms |
| 20x-Multiviewer | 3 ms |
| Linear Mix | 1 ms |

Executing all individual processing steps needs in total 14 ms which remains in the allowed time range of 16.7 ms. The user can be sure that the processing is finished until the next frame is displayed. In this sense the example above is a "save" processing.

As a second example the following processing steps are considered:

| | |
|---|---|
| Color Correction | 1 ms |
| Chromakey | 2 ms |
| 2D-swirl-effect | 2 ms |
| 3D-pageturn | 1 ms |
| 3D-Teapot | 4 ms |
| 20x-Multiviewer | 3 ms |
| Linear Mix | 1 ms |
| OTS-Effect | 4 ms |
| Blur Effect | 3 ms |

Executing all individual processing steps of the second example yields the sum of 21 ms processing time in total which is more than the allowed time range. This means for the user that the processing cannot be completed from one frame to the next frame. In order to solve this conflict several solutions are offered to the user:
a) Reducing the number of processing steps;
b) adapting the type of processing, e.g. 8-Bit processing in place of 16-Bit processing, 4x multisampling in place of 8x multisampling, etc. Though this can result in lower image quality it is sometimes not even visible;
c) selecting a lower frame rate, e.g. 30Hz in place of 60Hz, results in this example in a frame rate of 33.3 ms and thus the allowed processing time range is also 33.3 ms. The processing time of 21 ms required in the second example is then again below the allowed processing time range of 33.3 ms.

The method according to present invention secures in the video/audio processing system comprising a plurality of input and processing units which are connected by an IP network that all necessary signals are available in a timely manner and the image processing is executed in real-time.

### List of reference numbers

100 vision mixer
102 crosspoint matrix
103 input signals
104 output signals
105 mixing and a video effect stage
106 process video output signal
107 input unit
108 control bus
109 control unit
111 control box
112 control box
200 processing system
201 processing unit
202 external sources
203 processing unit
204 external sources
205 processing unit
206 local sources
207 processing unit
208, 209 output signals
210 data links
301 resources for processing, routing, and transmitting signals
302 providing input signals
303 processing input signals
304 routing the processed signals
305 monitoring required resources
306 comparing required resources with available resources.
307 issuing a warning message
401A- 401D input unit
402 network switch
403A, 403B processing unit
404 network link
405A- 405D inputs

## Claims

1. Method of operating a video/audio processing apparatus, and wherein the system comprises a plurality of processing units connected by data links for communicating packetized data, wherein the method comprises the following steps:
- receiving the input signals (303) according to user requests;
- providing resources (301, 405A-405D) for processing, routing, and transmitting signals;
- providing input signals (302);
- routing the input signals (304) to selectable destinations according to user requests;
- monitoring the required resources (305) for processing and/or routing the signals;
- comparing the required resources with available resources (306); and
- issuing a warning message (307) to the user if the required resources exceed the available resources of the system.

2. Method according to claim 1, wherein the method further comprises the step of selecting input signals for the production.

3. Method according to claim 2, wherein the method further comprises the step of calculating the necessary bandwidth for routing the selected input signals to the selected destinations.

4. Method according to claim 1, wherein the method further comprises the step of routing the processed signals to selectable destinations.

5. Method according to claim 3, wherein the method further comprises the step of issuing a warning message if the necessary bandwidth for routing the selected input signals to the selected destinations exceeds the guaranteed bandwidth.

6. Method according to claim 1, wherein the method further comprises the step of calculating the necessary processing time and issuing a warning message if the available processing power does not permit real-time processing.

7. Processing apparatus adapted for executing the method according to one or several of the preceding claims.
